(19) Europäisches Patentamt
European Patent Office
Office européen des brevets

(11) Publication number: **0 035 291**
**B1**

(12) **EUROPEAN PATENT SPECIFICATION**

(45) Date of publication of patent specification: **11.05.83**

(51) Int. Cl.³: **C 08 F 4/00**, C 08 L 23/16, C 08 F 299/04, C 07 B 29/04

(21) Application number: **81200143.6**

(22) Date of filing: **06.02.81**

(54) **Process for carrying out radical reactions and shaped articles of the reaction product.**

(30) Priority: **29.02.80 NL 8001231**

(43) Date of publication of application:
**09.09.81 Bulletin 81/36**

(45) Publication of the grant of the patent:
**11.05.83 Bulletin 83/19**

(84) Designated Contracting States:
**BE DE FR GB IT NL SE**

(56) References cited:
**FR - A - 1 141 742**
**GB - A - 874 289**
**GB - A - 1 169 988**

**JOURNAL OF ORG. CHEM., vol. 36, no. 2, 1971 WASHINGTON D.C. (US)**
**J. E. JOHNSON et al.: "Alkylation of Benzohydroxamic Acid", pages 284—294**

(73) Proprietor: **Akzo N.V.**
**Velperweg 76**
**NL-6824 BM Arnhem (NL)**

(72) Inventor: **Beijleveld, Wilhelmus Maria**
**Johan de Wittstraat 7**
**NL-8121 ZM Olst (OV.) (NL)**
Inventor: **Van Drumpt, Jan Dirk**
**Keizer Karellaan 61**
**NL-7415 ZD Deventer (NL)**
Inventor: **Verhelst, Willem Franciscus**
**Pikeursbaan 2**
**NL-7213 BT Gorssel (Ov.) (NL)**
Inventor: **Wiersum, Ulfert Elle**
**Alteveerselaan 6**
**NL-6881 AV Velp (Gld.) (NL)**

(74) Representative: **Sieders, René et al,**
**P.O. Box 314**
**NL-6800 AH Arnhem (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England

# Process of carrying out radical reactions and shaped articles of the reaction product

The present invention relates to a process of carrying out radical reactions. Usual radical initiators are organic peroxides. Such a process is generally known.

The present invention relates to a process of the type indicated above and is characterized in that as initiator there is used a compound of the general formula:

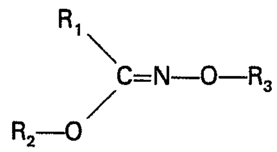

(I)

wherein

$R_1$= a substituted or unsubstituted group in the form of
an alkyl group having 1—22 carbon atoms,
an alkenyl group having 2—22 carbon atoms,
a cyclohexyl group having 6—20 carbon atoms,
a phenyl group having 6—20 carbon atoms,
an aralkyl group having 7—20 carbon atoms

$R_2$= a substituted or unsubstituted group in the form of
an alkyl group having 1—20 carbon atoms,
an alkenyl group having 2—20 carbon atoms,
a cyclohexyl group having 6—20 carbon atoms,
a phenyl group having 6—20 carbon atoms,
an aralkyl group having 7—20 carbon atoms,
an alkyl carbonyl group having 2—21 carbon atoms,
an alkenyl carbonyl group having 3—21 carbon atoms,
a cyclohexyl carbonyl group having 7—21 carbon atoms,
a phenyl carbonyl group having 7—21 carbon atoms,
an aralkyl carbonyl group having 8—21 carbon atoms,
an alkoxy carbonyl group having 2—21 carbon atoms,
an alkenyloxy carbonyl group having 3—21 carbon atoms,
a cyclohexyloxy carbonyl group having 7—21 carbon atoms,
a phenyloxy carbonyl group having 7—21 carbon atoms,
an aralkyloxy carbonyl group having 8—21 carbon atoms

$R_3$= the groups as indicated for $R_2$, hydrogen, a group of the formula

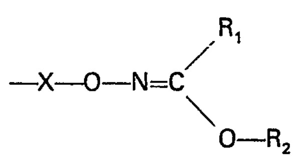

or a $YSO_2$ group

wherein

X = a substituted or unsubstituted group in the form of
an alkylene group having 1—12 carbon atoms,
an alkenylene group having 2—12 carbon atoms,
a cycloalkylene group having 6—12 carbon atoms or,
a phenylene group, and

Y = a substituted or unsubstituted group in the form of
an alkyl group having 1—20 carbon atoms,
a cycloalkyl group having 6—20 carbon atoms or
a phenyl group having 6—20 carbon atoms.

By alkyl groups and alkenyl groups are to be understood primary secondary or tertiary groups.

$R_1$, $R_2$, $R_3$, X and Y may be selected from a great many different groups.

Practically all these groups may be substituted in one or more places. Examples of suitable substituents include: alkyl groups, cyclohexyl groups, phenyl groups, phenyloxy groups, aralkyl groups, aralkyloxy groups, carboxyl groups, amino groups, nitro groups, halogen groups.

As halogen preferably chlorine is used.

It should be added that a great many of the compounds to be employed in the present process as initiators are described in German Patent Application 2 705 034.

Also a number of these compounds are known from Annalen *281,* 169 (1894); American

Chemical Journal, *20* 1 (1898); Americal Chemical Journal *33*, 60 (1905); Berichte *24*, 3447 (1891); Australian Journal of Chemistry, *22*, 161 (1969); Journal of Organic Chemistry, *36* (2), 284 (1971); Journal of Organic Chemistry, *37*, 3520 (1972) and Journal of the Chemical Society, 1080 (1977).

None of the above-mentioned publications disclose that the compounds described may be used as free radical initiators.

The hydroximic acid derivatives to be applied in the present process may be used as initiators in a great many radical reactions.

Generally, these compounds are employed in reactions that are to be initiated thermally, more particularly in reactions that are carried out at a temperature in the range of 50° to 350°C. Examples of such reactions include the homo- or copolymerization of $\alpha$-olefins, the copolymerization of unsaturated polyester resins, the cross-linking of rubbers and thermoplastics, and radical substitution and radical elimination reactions, including halogen substitutions and polymer degradations.

It is preferred, however, that these compounds be applied in the copolymerization of unsaturated polyester resins, in the cross-linking and in the degradation of polymers.

According to United States Patent Specification 3 367 994 unsaturated polyester resins are mixtures of unsaturated polyesters and one or more vinyl groups or vinylidene groups-containing monomers, such as styrene, vinyl toluene, methylmethacrylate, diallylphthalate and divinyl benzene. The ratio of monomer to unsaturated polyester is generally in the range of from 30—50% by weight of monomer to 70—50% by weight of polyester.

The unsaturated polyester is obtained by reacting approximately equivalent amounts of a polyvalent alcohol, such as ethylene glycol, propylene glycol, diethylene glycol, and an unsaturated dibasic carboxylic acid such as maleic acid, fumaric acid, itaconic acid, or the corresponding acid anhydrides, optionally in the presence of a saturated acid, such as phthalic acid, isophthalic acid, tetrachlorophthalic acid, malonic acid, adipic acid, succinic acid, sebacic acid and the like.

To the polyester resin to be copolymerized there is generally added 0,1—10% by weight and preferably 0,5—2,0% by weight of the present initiator.

Moreover, use may be made of accelerators such as ferric naphthenate or ferric acetyl acetonate. Copolymerization is generally carried out at a temperature in the range of from 0° to 200°C and preferably 50° to 150°C.

Examples of polymers to be cross-linked according to the present invention include polyethylene, chlorosulphonated polyethylene, chlorinated polyethylene, polybutylene-1, polyisobutylene, ethylene vinyl acetate copolymers, ethylene propylene copolymers, polybutadiene, polyisoprene, polychloroprene, butadiene styrene copolymers, natural rubber, polyacrylate rubber, butadiene acrylonitrile copolymers, acrylonitrile butadiene styrene terpolymers, silicone rubber, polyurethanes and polysulphides.

The present process is preferably used for cross-linking polyethylene and copolymers of ethylene and propylene (EMP and EPDM). To the polymer to be cross-linked there is generally added 0,1—10% by weight and preferably 1—3% by weight of the present initiator.

It is preferred that the cross-linking should be carried out in the presence of co-agents such as triallyl cyanurate, trimethylol propane trimethacrylate or low molecular weight polybutadienes.

It is preferred that as co-agent triallyl cyanurate should be used. The co-agents are added in an amount of 0,5—5,0% by weight.

Thr cross-linking reaction is generally carried out at a temperature in the range of from 150° to 300°C.

Both the copolymerizations and the cross-linking reactions can be carried out by the usual techniques and in the appropriate equipment.

The present process also relates to the degradation of polymers. The need for degradation arises from the fact that polymers prepared by way of the Ziegler-Natta system have an unduly high molecular weight and consequently too high a viscosity to be readily processed into fibres, films, granules and other shaped articles. Degradation results in the molecular weight and the viscosity being reduced and in a narrowing of the molecular weight distribution.

Degradation may be carried out in a known manner, for instance as described in the British Patent Specifications 1 407 356 and 1 422 681. As examples of suitable polymers may be mentioned all polymers prepared by the Ziegler-Natta process, including polypropylene and copolymers of propylene. A preferably applied polymer is polypropylene. The polymer may be stabilized in a known manner with, for instance, antioxidants and light protective agents, in that case the hydroximic acid derivative is generally mixed with the stabilized polymer, followed by degradation. The present radical-forming compound is generally employed in an amount of 0,001—0,5 parts by weight per 100 parts by weight of polymer.

Degradation may be carried out in any conventional mixer, in which the polymer may be heated to above the melt temperature, such as a melt extruder, a screw injection moulding machine or a kneader.

Degradation with the aid of the present hydroximic acid derivatives is generally carried out at 170°—350°C, and preferably at 220°—300°C. The duration of the treatment is dependent on the degree of degradation desired. Generally, the treatment will last between 1 and 30 minutes. Over the usual peroxides, such as 2,5-di-t-butylperoxy-2,5-di-methyl hexane employed for this purpose the

present compounds have the advantage that they permit the degree of degradation to be far more satisfactorily controlled in actual practice.

The resulting polymer can be processed further directly or be granulated in a known manner and stored.

Although it is not quite clear yet by what mechanism the initiators operate, it would seem safe to assume that upon (thermal) decomposition they at least partly disintegrate into three fragments, viz. the nitrile compound ($R_1—C{\equiv}N$) and two radicals ($R_2O$ and $R_3O$).

Such disintegration leads to the formation of the same radicals as upon decomposition of an organic peroxide of the formula $R_2—O—O—R_3$. The peroxides of this formula are referred to hereinafter as peroxides "corresponding" to the hydroximic acid derivatives.

It has been found that the decomposition temperature of these hydroximic acid derivatives is about 40°—120°C higher than that of the "corresponding" organic peroxides. Consequently, these hydroximic acid derivatives are generally safer than the "corresponding" peroxides.

This higher decomposition temperature may be of advantage for a number of uses, and more particularly in cases where the higher reaction temperature and/or the maximum permissible processing temperature leads to a lower viscosity and a better processability of the reaction mass.

This advantage of improved processability is especially of importance in the cross-linking of thermoplastics and the degradation of polymers.

It will be evident that—as in the case of a peroxide—the usefulness of a hydroximic acid derivative is not only governed by the type of radicals formed but also by the rate at which they are formed at a particular reaction temperature. There is, of course, no point in applying hydroximic acid derivatives at a temperature at which for practical purposes too few radicals are formed per unit time.

Following is an anumeration of the present hydroximic acid derivatives that have been found to be suitable initiators particularly in (thermal) radical reactions. It is, of course, also possible to use mixtures of these substances. The hydroximic acid derivatives have been classified into different groups. The classification used here is the same as the one that applies to the "corresponding" peroxides. Also the limiting values for $R_1$, $R_2$ X and Y are identical with the values that are known for the corresponding peroxides.

A suitable class of compounds is formed by the group of the present hydroximic acid derivatives wherein $R_1$ has the above-mentioned meaning and

$R_2$= a substituted or unsubstituted group in the form of:
an alkyl group having 1—20 carbon atoms,
an alkenyl group having 2—20 carbon atoms,
a cyclohexyl group having 6—20 carbon atoms or,
an aralkyl group having 7—20 carbon atoms, and
$R_3$= hydrogen.

Examples of these compounds are:
ethyl dodecanehydroximate, allyl acetohydroximate, cyclohexyl benzohydroximate and cumyl benzohydroximate.

The peroxides "corresponding" to this class of hydroximic acid derivatives are referred to as hydroperoxides.

Another suitable class of compounds is formed by the group of the present hydroximic acid derivatives wherein $R_1$ has the above-mentioned meaning and

$R_2$= a substituted or unsubstituted group in the form of
an alkyl group having 1—20 carbon atoms,
a cyclohexyl group having 6—20 carbon atoms, or
an aralkyl group having 7—20 carbon atoms.
$R_3$= a group as indicated for $R_2$.

Examples of these compounds are:
ethyl-O-ethyl benzohydroximate,
tert.butyl-O-ethyl dodecanehydroximate,
cumyl-O-methyl acetohydroximate, and
tert. but-O-tert. butylbenzohydroximate.

The peroxides "corresponding" to these compounds are referred to as dialkyl peroxides.

Another suitable class of compounds is formed by the group of the present hydroximic acid derivatives wherein $R_1$ has the above-mentioned meaning and

$R_2$= a substituted or unsubstituted phenyl carbonyl group having 7—21 carbon atoms.
$R_3$= a group as indicated for $R_2$

Examples of these compounds are:
benzoic O-benzoyl benzohydroximic anhydride, and
trimethylaceto-O-benzoyl benzohydroximic anhydride.

The peroxides "corresponding" to these compounds are referred to as diacyl peroxides.

A further class of compounds is formed by the group of the present hydroximic acid derivatives wherein $R_1$ has the above-mentioned meaning, and

$R_2$= a substituted or unsubstituted group in the form of
an alkyl group having 1—20 carbon atoms,
an alkenyl group having 2—20 carbon atoms,
a cyclohexyl group having 6—20 carbon atoms,
a phenyl group having 6—20 carbon atoms,
an aralkyl group having 7—20 carbon atoms, and

$R_3$= a substituted or unsubstituted group in the form of
an alkoxy carbonyl group having 2—21 carbon atoms,
an alkenyloxy carbonyl group having 3—21 carbon atoms,
a cyclohexyloxy carbonyl group having 7—21 carbon atoms,
a phenyloxy carbonyl group having 7—21 carbon atoms, or
an aralkyloxy carbonyl group having 8—21 carbon atoms.

Examples of these compounds are:
ethyl-O-(isopropyloxy carbonyl)-dodecanehydroximate, and propyl-O-(cyclohexyl carbonyl)-benzohydroximate.

The peroxides "corresponding" to these compounds are referred to as peroxycarbonates.

A class of particularly suitable initiators is formed by the group of the present hydroximic acid derivatives wherein $R_1$ has the above-mentioned meaning, and any one of the groups

$R_2$ and $R_3$= a substituted or unsubstituted group in the form of
an alkyl group having 1—20 carbon atoms,
an alkenyl group having 2—20 carbon atoms,
a cyclohexyl group having 6—20 carbon atoms,
a phenyl group having 6—20 carbon atoms, or
an aralkyl group having 7—20 carbon atoms.

and the other
group = a substituted or unsubstituted group in the form of
an alkyl carbonyl group having 2—21 carbon atoms,
an alkenyl carbonyl group having 3—21 carbon atoms,
a cyclohexyl carbonyl group having 7—21 carbon atoms,
a phenyl carbonyl group having 7—21 carbon atoms, or
an aralkyl carbonyl group having 8—21 carbon atoms.

Examples of these compounds are:
tert.butyl-O-pivaloyl dodecanehydroximate,
ethyl-O-phenoxyacetyl dodecanehydroximate,
ethyl-O-methacryloyl dodecanehydroximate,
tert.butyl-O-ethylhexanoyl benzohydroximate,
tert.butyl-O-benzoyl acetohydroximate, and
tert.butyl-O-benzoyl benzohydroximate.

As initiators of this class preferably those compounds are used wherein

$R_1$= an alkyl group having 2—20 carbon atoms,
$R_2$= an alkyl group having 1—5 carbon atoms,
$R_3$= a substituted or unsubstituted phenyl carbonyl group having 7—21 carbon atoms.

As examples of these compounds may be mentioned:
ethyl-O-benzoyl propiohydroximate,
ethyl-O-benzoyl dodecanehydroximate,
methyl-0-2,4 dichlorobenzoyl pivalohydroximate, and
tert.butyl-O-benzoyl n-butyrohydroximate.

For many applications a preferably used initiator is ethyl-O-benzoyl dodecanehydroximate. In addition to this compound displaying a very good activity and efficiency in radical reactions, the dodecane nitrile formed in the initiation is not or hardly toxic.

The peroxides "corresponding" to this class of compounds are referred to as peresters.

Hydroximic acid derivatives may be prepared in various ways. Hydroximic acid derivatives may be prepared for instance from the corresponding imidates. They may be formed in a known manner by bringing a nitrile($R_1$—C≡N) into reaction with an alcohol in the presence of an acid such as HCl.

The resulting salt is treated with an aqueous solution of an alkali carbonate and an organic substance such as ether, in which the imidate as such is soluble. After drying the organic phase and evaporating the organic solvent there is left the pure imidate of the formula:

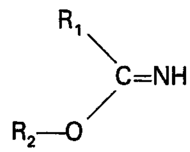

Compounds according to the invention are prepared by bringing the imidate thus obtained into reaction with a hydroxylamine salt such as hydroxyl ammonium chloride or hydroxyl ammonium sulphate.

The reaction is carried out in the presence of an organic solvent, such as ether, benzene, toluene, hexane or dichloromethane.

The reaction is generally carried out with stirring and at a temperature in the range of from 0° to 40°C. Upon completion of the reaction the organic phase is separated from the aqueous phase. Subsequently, the organic phase is dried. Suitable drying agents are sodium sulphate and magnesium sulphate.

After evaporation there is obtained the hydroximate of the formula

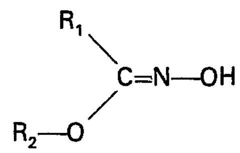

The other compounds according to the invention are obtained by reacting the hydroximate with a compound of the formula $R_3Cl$ (wherein $R_3$, of course, does not represent a hydrogen atom). This reaction is run in an organic solvent, such as ether, benzene, toluene, hexane or dichloromethane.

The reaction is carried out in the presence of a base. Suitable bases are: pyridine, $NaHCO_3$ and $K_2CO_3$. The reaction is generally carried out with stirring and at a temperature within the range of 0° to 40°C.

After the salt formed has been filtered off, the compound according to the invention is obtained by evaporating the organic solvent.

The following examples serve to illustrate the present invention. In the Examples 1 through 7 the preparation is described of the initiators tested in the Examples 8 through 12.

Example 1

14 g of hydroxyl ammonium chloride were dissolved in 100 ml of water. The resulting solution was introduced into a 250-ml flask along with 100 ml of ether. The mixture was cooled to 2°C and 45,4 g of ethyl dodecaneimidate were added, with stirring. Stirring was continued for 30 minutes at 2°C. After separating the layers, the aqueous layer was extracted three times with 75 ml of ether. The ether layers collected were dried in $Na_2$ $SO_4$ and subsequently concentrated by evaporation. In this way 37,3 g of white solid matter were obtained (yield 77%)., By IR and NMR analysis it was confirmed that ethyl dodecanehydroximate had been obtained.

Example 2

12,5 g of ethyl dodecanehydroximate and 4,0 g of pyridine were dissolved in 60 ml of ether in a three-neck flask fitted with a stirrer, a thermometer and a dropping funnel. The mixture was cooled to 2°C, followed by slowly adding a solution of 7,1 g of benzoyl chloride in 10 ml of ether. Stirring was continued for 5 hours at 20°C. Next, the white precipitate of pyridine.HCl salt was filtered off and the ether solution was concentrated by evaporation. Ethyl-O-benzoyl dodecanehydroximate was left in the form of liquid.

Yield 17,0 g (100%). By IR and NMR analysis it was confirmed that the desired structure had been obtained.

Example 3

3,0 g of ethyl propiohydroximate and 2,0 g of pyridine were dissolved in 25 ml of ether in a three-neck flask equipped with a stirrer, a thermometer and a dropping funnel. The mixture was cooled to 2°C, followed by slowly adding a solution of 3,6 g of benzoyl chloride in 10 ml of ether. Stirring was continued for 3 1/2 hours at 20°C. Next, the white precipitate of pyridine.HCl salt was filtered off and the ether solution was concentrated by evaporation. In this way 4,9 g of white solid matter were obtained. The yield was 66%. By IR and NMR analysis is was confirmed that ethyl-O-benzoyl propiohydroximate had been obtained.

The same procedure was used for preparing the following compounds:
ethyl-O-benzoyl acetohydroximate,
ethyl-O-terephthaloyl acetohydroximate,
ethyl-O-azeloyl acetohydroximate,

ethyl-O-methacryloyl acetohydroximate,
ethyl-O-benzoyl benzohydroximate,
butyl-O-acetyl benzohydroximate,
ethyl-O-pivaloyl dodecanehydroximate,
ethyl-O-phenoxyacetyl dodecanehydroximate,
ethyl-O-p.toluene sulphonyl dodecanehydroximate.

Example 4

12,5 g of ethyl dodecanehydroximate and 4,0 g of pyridine were dissolved in 60 ml of dichloromethane in a 200-ml three-neck flask fitted with a stirrer, a thermometer and a dropping funnel. The resulting mixture was cooled to 3°C. Over a period of 15 minutes 6,2 g of isopropyl chloroformiate were added dropwise. Stirring was continued for 1 hour at 3°C and a further 24 hours at 20°C. Next, the mixture was filtered off and the dichloromethane solution was dried and concentrated by evaporation. In this way 14,2 g of ethyl-O-(isopropyloxy carbonyl)dodecanehydroximate were obtained (yield 85%). By IR and NMR analysis it was confirmed that the desired structure had been obtained.

Example 5

Into a 2-l three-neck flask fitted with a stirrer, a thermometer and a condenser, and a gas inlet tube there was introduced a solution of 47,2 g of potassium tert.butylate in 400 ml of tetrahydrofurane. Subsequently, there was added dropwise a solution of 31,2 g of benzocarboximidoyl in 100 ml of tetrahydrofurane chloride at 25°C. Next, the reaction mixture was stirred for 22 hours at 20°C, followed by introducing $CO_2$ for 2 hours. After adding 250 ml of ether and 250 ml of water two clear layers were obtained.

The organic layer was separated and concentrated by evaporation at 40°C. In this way 26,3 g of residue were obtained.

The structure of the resulting tert.butyl benzohydroximate was confirmed by IR and NMR analysis. This product was then converted into tert.butyl-O-benzoyl benzohydroximate by means of benzoyl chloride in the manner indicated in Example 3.

Example 6

100 ml of absolute ethanol were introduced into a 250-ml three-neck flask fitted with a stirrer, a thermometer and a condenser. 4,6 g of sodium metal were slowly added in portions at 20°C. To the solution obtained there were successively added 14,5 g of ethyl benzohydroximate and 15,6 g of ethyl iodide. The resulting mixture was heated to 60°C, at which temperature it was stirred for 2 hours.

After the mixture has been cooled, 65 ml of water, 50 ml of ether and 50 ml of petroleum ether was added. After separating the layers, the organic layer was dried on $K_2CO_3$ and concentrated by evaporation at 20°C. As a result, ethyl-O-ethyl benzohydroximate was obtained in the form of a pale yellow liquid.

Weight: 9,8 g. Yield: 65%.

By IR and NMR analysis it was confirmed that the desired structure had been obtained.

Example 7

First of all 50,2 g of O-benzoyl benzohydroximic acid, sodium salt and 550 ml of diethyl ether were charged into a 1-l three-neck flask equipped with a stirrer, a thermometer, a condenser and a dropping funnel.

Subsequently, 25.3 g of benzoyl chloride in 50 ml of diethyl ether was added over a period of 15 minutes at 20°C. The mixture was stirred for 30 hours at room temperature. Next, it was filtrated and the filtrate was concentrated by evaporation under reduced pressure, leaving a residue of 44,2 g of solid matter. This crude product was purified by stirring it with 100 ml of pentane at 0°C, followed by filtration. The solid matter was dried. There were obtained 34,2 g of very pure benzoic O-benzoyl benzohydroximic anhydride by recrystallization from benzene. The yield was 55%. By IR and NMR analysis it was confirmed that the desired structure had been obtained.

Example 8

For determining the initiating capacity of the compounds prepared in the Examples 1 through 7 use was made of a somewhat modified "SPI" test as described in NEN 20584 (1969) and ISO method R584 (1967). This test was carried out by dissolving 0,069 g of initiator in 6 g of resin. The resin used was made up of 64 parts of a polycondensate of 1 mole of phthalic anhydride, 1 mole of maleic anhydride and 2,2 moles of ethylene glycol and 36 parts of styrene (type Ludopal P—6 from BASF). The reaction mixture was introduced into a test-tube provided with a thermocouple. Subsequently, the test-tube was placed in a bath having a temperature of 150°C, after which the resin temperature was measured at a function of time.

Table I gives the peak time and the maximum temperature. The former quantity is a parameter for the reaction rate, the latter for the efficiency of the initiator.

For comparison also the peak time and the maximum temperature are given for the case where no

initiator was added. The peak observed is caused then by a purely thermal curing of the resin.

The results clearly show that the present compound are very suitable to be used as initiator in the copolymerization of unsaturated polyester resins.

TABLE I

| Initiator | peak time (min.) | max. temp. °C. |
|---|---|---|
| none | 24,3 | 178 |
| ethyl-O-benzoyl acetohydroximate | 6,3 | 244 |
| ethyl-O-terephtaloyl acetohydroximate | 6,2 | 258 |
| ethyl-O-azeloyl acetohydroximate | 6,1 | 270 |
| ethyl-O-methacryloyl acetohydroximate | 5,6 | 258 |
| ethyl-O-benzoyl propiohydroximate | 5,9 | 258 |
| ethyl-O-benzoyl benzohydroximate | 6,2 | 225 |
| tert.butyl-O-benzoyl benzohydroximate | 7,8 | 249 |
| butyl-O-acetyl benzohydroximate | 5,8 | 238 |
| ethyl-O-benzoyl dodecanehydroximate | 5,3 | 263 |
| ethyl-O-(isopropyloxycarboxy) dodecanehydroximate | 3,1 | 282 |
| ethyl-O-pivaloyl dodecanehydroximate | 5,8 | 268 |
| ethyl-O-phenoxyacetyl dodecanehydroximate | 4,2 | 266 |
| ethyl-O-p. toluene sulphonyl dodecanehydroximate | 5,1 | 273 |
| ethyl dodecanehydroximate | 4,9 | 269 |
| ethyl-O-ethyl benzohydroximate | 9,3 | 237 |
| benzoic-O-benzoyl benzohydroximic anhydride | 5,3 | 259 |

Example 9

The experiments described in Example 8 were repeated. The resin, however, was made up of 60 parts of a polycondensate of 1 mole of phthalic anhydride, 1 mole of maleic acid and 2,2 moles of ethylene glycol and 40 parts of diallyl phthalate (type: Synolite 311 from Synres) and the bath temperature was 200°C.

The results are listed in Table II. They confirm the results obtained in the experiments of Example 8.

TABLE II

| Initiator | peak time (min.) | max. temp. °C |
|---|---|---|
| none | – | 200 |
| ethyl-O-benzoyl acetohydroximate | 2,4 | 259 |
| ethyl-O-terephtaloyl acetohydroximate | 2,9 | 278 |
| ethyl-O-azeloyl acetohydroximate | 3,1 | 262 |
| ethyl-O-methacryloyl acetohydroximate | 2,6 | 228 |
| ethyl-O-benzoyl propiohydroximate | 3,1 | 263 |
| ethyl-O-benzoyl benzohydroximate | 2,4 | 247 |
| butyl-O-acetyl benzohydroximate | 2,7 | 251 |
| ethyl-O-benzoyl dodecanehydroximate | 3,0 | 260 |
| ethyl-O-(isopropyloxycarboxy) dodecanehydroximate | 3,1 | 282 |
| ethyl-O-pivaloyl dodecanehydroximate | 3,1 | 293 |
| ethyl-O-phenoxyacetyl dodecanehydroximate | 2,6 | 270 |
| ethyl-O-p.toluene sulphonyl dodecanehydroximate | 6,3 | 213 |
| ethyl dodecanehydroximate | 5,5 | 240 |
| benzoic O-benzoyl benzohydroximic anhydride | 3.7 | 272 |

Example 10

100 g of low-density polyethylene powder (type: Alkathene 0.25.030 from ICI) were mixed in a Waring blender with 1 g of triallyl cyannurate and 5 millimoles of initiator. The cross-linking behaviour of the mixture was determined in a Monsanto Rheometer. This method consists in that in a heated press an oscillating disc (a so-called micro-die; 5° osc., 1,7 Hz) is embedded in the mixture to be cross-linked, which is heated to a temperature of 220°C. During cross-linking the resistance to the motion of the disc as a function of time is registered. From the resulting curve the $t_{90}$ (min) and the Δ torque (Nm) are calculated. (Δtorque= $M_H$ —$M_L$; $M_H$= maximum torque, $M_L$= minimum torque). These parameters are a measure of, respectively, the reaction rate and the efficiency of the initiator used. The method is described in int.al., ASTM D—2084—79, BS 1673 (10) 1977 and ISO 3417 (1977).

Moreover, a number of blends were cross-linked in the hot press at 220°C over the period mentioned in Table III; the gel fraction of the cross-linked material was determined by the extraction method. This method was carried out in boiling xylene and in accordance with the standard specifications BS 5468—1977 and ANSI/ASTM D 2765—68 (1972).

The gel fraction (in %) is indicative of the percentage of cross-linked polymer which does not dissolve under the test conditions. This parameter is a measure of the degree of cross-linking of the polymer and, hence, of the efficiency of the initiator.

The results are summarized in Table III. They show that the present compounds are suitable initiators for the cross-linking of low density polyethylene.

TABLE III

| Initiator | Rheometer test: $t_{90}$ (min) | Rheometer test: Δ torque (Nm) | Extraction test: curing time (min) | Extraction test: gel fraction (%) |
|---|---|---|---|---|
| none | – | 0 | 30 | 0 |
| ethyl-O-benzoyl acetohydroximate | 23,5 | 2.69 | 25 | 85 |
| ethyl-O-terephthaloyl acetohydroximate | 23,5 | 2,04 | 25 | 81 |
| ethyl-O-azeloyl acetohydroximate | 30,2 | 1,64 | | |
| ethyl-O-methacryloyl acetohydroximate | 31,0 | 1,59 | | |
| ethyl-O-benzoyl propiohydroximate | 21,2 | 2,17 | 25 | 79 |
| ethyl-O-benzoyl benzohydroximate | 17,9 | 2,70 | 20 | 84 |
| butyl-O-acetyl benzohydroximate | 20,1 | 2,23 | 25 | 81 |
| ethyl-O-benzoyl dodecanehydroximate | 18,5 | 2,09 | 20 | 80 |
| ethyl-O-(isopropyloxycarboxy)dodecanehydroximate | 56,5 | 2,55 | 60 | 77 |
| benzoic-O-benzoyl benzohydroximic anhydride | 31,1 | 2,36 | | |

Example 11

100 g of high-density polyethylene (of the Stamylan 9300 type from DSM) were mixed on a two-roll mill for 3 minutes at 150°C with 1 g of triallyl cyanurate and 5 millimoles of ethyl-O-benzoyl dodecane hydroximate and subsequently cooled and granulated at room temperature. In the same manner a mixture was prepared from 100 g of high-density polyethylene and 2,5 millimoles of 1,3-bis(tertiary butylperoxyisopropyl)benzene (Perkadox 14 from Akzo). So in the two mixtures the initiator is contained in an equal number of gram equivalents. The cross-linking behaviour of these mixtures was determined with the aid of a Monsanto Rheometer at 220°C and 180°C, respectively. After the two mixtures had been cross-linked in a hot press (for 25 minutes at 220°C and for 15 minutes at 180°C, respectively) their gel fraction was determined in the manner indicated in Example 10.

The results are listed in Table IV. They show that ethyl-O-benzoyl dodecanehydroximate is a very suitable initiator for cross-linking high-density polyethylene. Notably it is of advantage that the permissible processing temperature is considerably higher than in the case of most organic peroxides.

TABLE IV

| Initiator | Rheometer test: temp. (°C) | Rheometer test: $t_{90}$ (min) | Rheometer test: Δ torque (Nm) | Extraction test: gel fraction (%) |
|---|---|---|---|---|
| none | 220 | – | 0 | 0 |
| ethyl-O-benzoyl dodecane hydroximate | 220 | 21,5 | 2,00 | 78 |
| 1,3-bis(t.butylperoxy-isopropyl)benzene | 180 | 11,8 | 2,03 | 81 |

Example 12

In a beaker 50 g polypropylene powder were mixed with 0,05 g of the hydroximic acid derivatives prepared according to the Examples 2, 6 and 7. These mixtures were added to the chamber of a Haake Rheocord fitted with a chamber Rheomix type 500 containing Z-blades. The rotor speed was 64 r.p.m.

The chamber was heated electrically to a temperature of 280°C. The torque versus time was recorded. To demonstrate the effect of the present hydroximic acid derivatives, 5 experiments were carried out without any additive and one with 2,5-di-t-butylperoxy-2,5-dimethyl hexane as the degradant.

The results are summarized in Table V.

The above results show that the present hydroximic acid derivatives are suitable degrading agents. Moreover, it has been found that the degree of degradation can be more satisfactorily controlled when use is made of the hydroximic acid derivatives than when 2,5-di-t-butylperoxy-2,5-dimethyl hexane is employed.

TABLE V

| Initiator | Torque in Nm after x minutes degradation | | | | | | | | | |
|---|---|---|---|---|---|---|---|---|---|---|
| | 3 | 6 | 9 | 12 | 15 | 18 | 21 | 24 | 27 | 30 |
| none* | 0,582 | 0,401 | 0,327 | 0,281 | 0,253 | 0,232 | 0,210 | 0,193 | 0,177 | 0,164 |
| ethyl-O-benzoyl dodecane-hydroximate | 0,195 | 0,150 | 0,130 | 0,118 | 0,112 | 0,105 | 0,100 | 0,096 | 0,093 | 0,090 |
| ethyl-O-ethyl benzo-hydroximate | 0,573 | 0,320 | 0,283 | 0,144 | 0,111 | 0,095 | 0,083 | 0,074 | 0,071 | 0,066 |
| benzoic-O-benzoyl benzo-hydroximic anhydride | 0,284 | 0,161 | 0,140 | 0,125 | 0,119 | 0,111 | 0,103 | 0,099 | 0,097 | 0,095 |
| 2,5-di-t.butylperoxy 2,5-dimethyl hexane | 0,130 | 0,097 | 0,085 | 0,078 | 0,074 | 0.070 | 0,068 | 0,066 | 0,064 | 0,063 |

*mean values of 5 experiments

**Claims**

1. A process for carrying out radical reactions, characterized in that as initiator there is used a compound of the general formula:

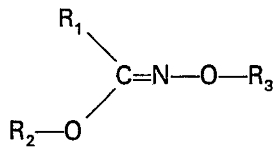

(I)

wherein

$R_1$= a substituted or unsubstituted group in the form of
an alkyl group having 1—22 carbon atoms,
an alkenyl group having 2—22 carbon atoms,
a cyclohexyl group having 6—20 carbon atoms,
a phenyl group having 6—20 carbon atoms, or
an aralkyl group having 7—20 carbon atoms

$R_2$= a substituted or unsubstituted group in the form of
an alkyl group having 1—20 carbon atoms,
an alkenyl group having 2—20 carbon atoms,
a cyclohexyl group having 6—20 carbon atoms,
a phenyl group having 6—20 carbon atoms,
an aralkyl group having 7—20 carbon atoms,
an alkyl carbonyl group having 2—21 carbon atoms,
an alkenyl carbonyl group having 3—21 carbon atoms,
a cyclohexyl carbonyl group having 7—21 carbon atoms,
a phenyl carbonyl group having 7—21 carbon atoms,
an aralkyl carbonyl group having 8—21 carbon atoms,
an alkoxy carbonyl group having 2—21 carbon atoms,
an alkenyloxy carbonyl group having 3—21 carbon atoms,
a cyclohexyloxy carbonyl group having 7—21 carbon atoms,
a phenyloxy carbonyl group having 7—21 carbon atoms, or
an aralkyloxy carbonyl group having 8—21 carbon atoms

$R_3$= the groups as indicated for $R_2$, hydrogen, a group of the formula

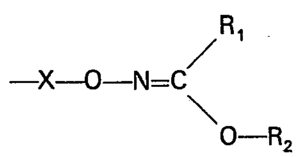

or a $YSO_2$ group

wherein

X = a substituted or unsubstituted group in the form of
an alkylene group having 1—12 carbon atoms,
an alkenylene group having 2—12 carbon atoms,
a cycloalkylene group having 6—12 carbon atoms or,
a phenylene group, and

Y = a substituted or unsubstituted group in the form of
an alkyl group having 1—20 carbon atoms,
a cycloalkyl group having 6—20 carbon atoms or
a phenyl group having 6—20 carbon atoms.

2. A process according to claim 1, characterized in that as initiator there is used a compound of the formula I, wherein

$R_1$= has the meaning indicated and

$R_2$= a substituted or unsubstituted group in the form of
an alkyl group having 1—20 carbon atoms,
an alkenyl group having 2—20 carbon atoms,
a cyclohexyl group having 6—20 carbon atoms or,
an aralkyl group having 7—20 carbon atoms, and

$R_3$= hydrogen.

3. A process according to claim 1, characterized in that as initiator there is used a compound of the formula I, wherein $R_1$ has the meaning indicated and

$R_2$= a substituted or unsubstituted group in the form of
an alkyl group having 1—20 carbon atoms,
a cyclohexyl group having 6—20 carbon atoms, or
an aralkyl group having 7—20 carbon atoms.

$R_3$= a group as indicated for $R_2$.

4. A process according to claim 1, characterized in that as initiator there is used a compound of the formula I, wherein $R_1$ has the meaning indicated and

$R_2$= a substituted or unsubstituted phenyl carbonyl group having 7—21 carbon atoms.

$R_3$= a group as indicated for $R_2$

5. A process according to claim 1, characterized in that as initiator there is used a compound of the formula I, wherein $R_1$ has the meaning indicated, and

$R_2$= a substituted or unsubstituted group in the form of
an alkyl group having 1—20 carbon atoms,
an alkenyl group having 2—20 carbon atoms,
a cyclohexyl group having 6—20 carbon atoms,
a phenyl group having 6—20 carbon atoms, or
an aralkyl group having 7—20 carbon atoms, and

$R_3$= a substituted or unsubstituted group in the form of
an alkoxy carbonyl group having 2—21 carbon atoms,
an alkenyloxy carbonyl group having 3—21 carbon atoms,
a cyclohexyloxy carbonyl group having 7—21 carbon atoms,
a phenyloxy carbonyl group having 7—21 carbon atoms, or
an aralkyloxy carbonyl group having 8—21 carbon atoms.

6. A process according to claim 1, characterized in that as initiator there is used a compound of the formula I, wherein $R_1$ has the meaning indicated and one of the groups

$R_2$ and $R_3$= a substituted or unsubstituted group in the form of
an alkyl group having 1—20 carbon atoms,
an alkenyl group having 2—20 carbon atoms,
a cyclohexyl group having 6—20 carbon atoms,
a phenyl group having 6—20 carbon atoms, or
an aralkyl group having 7—20 carbon atoms.

and the other
group = a substituted or unsubstituted group in the form of
an alkyl carbonyl group having 2—21 carbon atoms,
an alkenyl carbonyl group having 3—21 carbon atoms,
a cyclohexyl carbonyl group having 7—21 carbon atoms,
a phenyl carbonyl group having 7—21 carbon atoms, or
an aralkyl carbonyl group having 8—21 carbon atoms.

7. A process according to claim 6, characterized in that as initiator there is used a compound of the formula I, wherein

$R_1$= an alkyl group having 2—20 carbon atoms,

$R_2$= an alkyl group having 1—5 carbon atoms,

$R_3$= a substituted or unsubstituted phenyl carbonyl group having 7—21 carbon atoms.

8. A process according to claim 7, characterized in that the initiator used is ethyl-O-benzoyl dodecanehydroximate.

9. A process according to any one of the preceding claims, characterized in that the compound of the formula I is used in the copolymerization of unsaturated polyester resins.

10. A process according to any one of the claims 1 to 8, characterized in that the compound of the formula I is used in the cross-linking of polymers.

11. A process according to claim 10, characterized in that the compound of the formula I is used in the cross-linking of (co)polymers of ethylene.

12. A process according to any one of the claims 1 to 8, characterized in that the compound of the formula I is used in the degradation of polymers.

13. A process according to claim 12, characterized in that the compound of the formula I is used in the degradation of polypropylene.

14. Shaped articles entirely or substantially consisting of (co)polymers obtained by the process according to claim 9, 10, 11, 12 or 13.

**Revendications**

1. Un procédé pour exécuter les réactions radicalaires, caractérisé en ce que l'on utilise en tant qu'inducteur un composé de formule générale

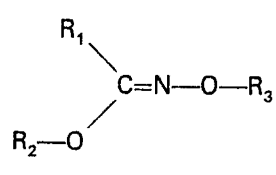

(I)

dans laquelle

$R_1$= un groupe substitué ou non sous la forme de
un groupe alkyle en C 1—C 22,
un groupe alcényle en C 2—C 22,
un groupe cyclohexyle en C 6—C 20,
un groupe phényle en C 6—C 20, ou
un groupe aralkyle en C 7—C 20

$R_2$= un groupe substitué ou non sous la forme de
un groupe alkyle en C 1—C 20,
un groupe alcényle en C 2—C 20,
un groupe cyclohexyle en C 6—C 20,
un groupe phényle en C 6—C 20,
un groupe aralkyle en C 7—C 20,
un groupe alkylcarbonyle en C 2—C 21,
un groupe alcénylcarbonyle en C 3—C 21,
un groupe cyclohexylcarbonyle en C 7—C 21,
un groupe phénylcarbonyle en C 7—C 21,
un groupe aralkylcarbonyle en C 8—C 21,
un groupe alcoxycarbonyle en C 2—C 21,
un groupe alcényloxycarbonyle en C 3—C 21,
un groupe cyclohexyloxycarbonyle en C 7—C 21,
un groupe phényloxycarbonyle en C 7—C 21, ou
un groupe aralkyloxycarbonyle en C 8—C 21;

$R_3$= les groupes indiqués pour $R_2$, l'hydrogène, un groupe de formule

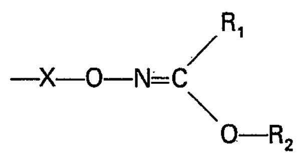

ou un groupe $YSO_2$

dans lesquels

X = un groupe substitué ou non sous la forme de
un groupe alkylène en C 1—C 12,
un groupe alcénylène en C 2—C 12,
un groupe cycloalkylène en C 6—C 12, ou
un groupe phénylène, et

Y = un groupe substitué ou non sous la forme de un groupe alkyle en C 1—C 20,
un groupe cycloalkyle en C 6—C 20, ou
un groupe phényle en C 6—C 20.

2. Un procédé selon la revendication 1, caractérisé en ce que l'on utilise en tant qu'inducteur un composé de formule I dans laquelle

$R_1$= les significations indiquées, et

$R_2$= un groupe substitué ou non sous la forme de
un groupe alkyle en C 1—C 20,
un groupe alcényle en C 2—C 20,
un groupe cyclohexyle en C 6—C 20, ou
un groupe aralkyle en C 7—C 20, et

$R_3$= hydrogène.

3. Un procédé selon la revendication 1, caractérisé en ce que l'on utilise en tant qu'inducteur un composé de formule I dans laquelle $R_1$ a la signification indiquée et

$R_2$= un groupe substitué ou non sous la forme de
un groupe alkyle en C 1—C 20,
un groupe cyclohexyle en C 6—C 20, ou
un groupe aralkyle en C 7—C 20,

$R_3$= un groupe tel qu'indiqué pour $R_2$.

4. Un procédé selon la revendication 1, caractérisé en ce que l'on utilise en tant qu'inducteur un composé de formule I dans laquelle $R_1$ a la signification indiqué et

$R_2$= un groupe phénylcarbonyle substitué ou non en C 7—C 21,

$R_3$= un groupe tel qu'indiqué pour $R_2$.

5. Un procédé selon la revendication 1, caractérisé en ce que l'on utilise en tant qu'inducteur un composé de formule I dans laquelle $R_1$ a la signification indiqué et

$R_2$= un groupe substitué ou non sous la forme de
un groupe alkyle en C 1—C 20,

un groupe alcényle en C 2—C 20,
un groupe cyclohexyle en C 6—C 20,
un groupe phényle en C 6—C 20, ou
un groupe aralkyle en C 7—C 20, et

$R_3$= un groupe substitué ou non sous la forme de
un groupe alcoxycarbonyle en C 2—C 21,
un groupe alcényloxycarbonyle en C 3—C 21,
un groupe cyclohexyloxycarbonyle en C 7—C 21,
un groupe phényloxycarbonyle en C 7—C 21, ou
un groupe aralkyloxycarbonyle en C 8—C 21.

6. Un procédé selon la revendication 1, caractérisé en ce que l'on utilise en tant qu'inducteur un composé de formule I dans laquelle $R_1$ a la signification indiquée et l'un des groupes

$R_2$ et $R_3$ = un groupe substitué ou non sous la forme de
un groupe alkyle en C 1—C 20,
un groupe alcényle en C 2—C 20,
un groupe cyclohexyle en C 6—C 20,
un groupe phényle en C 6—C 20, ou
un groupe aralkyle en C 7—C 20,

et l'autre
group un groupe substitué ou non sous la forme de
un groupe alkylcarbonyle en C 2—C 21,
un groupe alcénylcarbonyle en C 3—C 21,
un groupe cyclohexylcarbonyle en C 7—C 21,
un groupe phénylcarbonyle en C 7—C 21, ou
un groupe aralkylcarbonyle en C 8—C 21.

7. Un procédé selon la revendication 6, caractérisé en ce que l'on utilise en tant qu'inducteur un composé de formule I dans laquelle

$R_1$= un groupe alkyle en C 2—C 20,
$R_2$= un groupe alkyle en C 1—C 5,
$R_3$= un groupe phénylcarbonyle substitué ou non en C 7—C 21.

8. Un procédé selon la revendication 7, caractérisé en ce que l'inducteur utilisé est l'O-benzoyl-dodécane-hydroximate d'éthyle.

9. Un procédé selon l'une quelconque des revendications qui précèdent, caractérisé en ce que le composé de formule I est utilisé dans la copolymérisation de résines de polyesters insaturés.

10. Un procédé selon l'une quelconque des revendications 1 à 8, caractérisé en ce que le composé de formule I est utilisé dans la réticulation de polymères.

11. Un procédé selon la revendication 10, caractérisé en ce que le composé de formule I est utilisé dans la réticulation de (co) polymères de l'éthylène.

12. Un procédé selon l'une quelconque des revendications 1 à 8, caractérisé en ce que le composé de formule I est utilisé dans la dégradation de polymères.

13. Un procédé selon la revendication 12, caractérisé en ce que le composé de formule I est utilisé dans le dégradation du polypropylène.

14. Articles façonnés consistant en totalité ou en partie en (co) polymères obtenus par le procédé selon la revendication 9, 10, 11, 12 ou 13.

**Patentansprüche**

1. Verfahren zur Durchführung radikalischer Reaktionen, dadurch gekennzeichnet, daß als Initiator eine Verbindung der allgemeinen Formel (I)

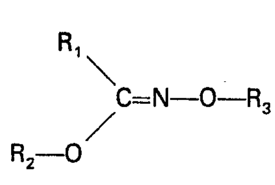

(I)

verwendet wird, in der

$R_1$ ein substituierter oder unsubstituierter Rest in Form eines
Alkylrestes mit 1 bis 22 Kohlenstoffatomen,
Alkenylrestes mit 2 bis 22 Kohlenstoffatomen,
Cyclohexylrestes mit 6 bis 20 Kohlenstoffatomen,
Phenylrestes mit 6 bis 20 Kohlenstoffatomen oder
Aralkylrestes mit 7 bis 20 Kohlenstoffatomen ist,

$R_2$ ein substituierter oder unsubstituierter Rest in Form eines
Alkylrestes mit 1 bis 20 Kohlenstoffatomen,

Alkenylrestes mit 2 bis 20 Kohlenstoffatomen,
Cyclohexylrestes mit 6 bis 20 Kohlenstoffatomen,
Phenylrestes mit 6 bis 20 Kohlenstoffatomen,
Aralkylrestes mit 7 bis 20 Kohlenstoffatomen,
Alkylcarbonylrestes mit 2 bis 21 Kohlenstoffatomen,
Alkenylcarbonylrestes mit 3 bis 21 Kohlenstoffatomen,
Cyclohexylcarbonylrestes mit 7 bis 21 Kohlenstoffatomen,
Phenylcarbonylrestes mit 7 bis 21 Kohlenstoffatomen,
Aralkylcarbonylrestes mit 8 bis 21 Kohlenstoffatomen,
Alkoxycarbonylrestes mit 2 bis 21 Kohlenstoffatomen,
Alkenyloxycarbonylrestes mit 3 bis 21 Kohlenstoffatomen,
Cyclohexyloxycarbonylrestes mit 7 bis 21 Kohlenstoffatomen,
Phenyloxycarbonylrestes mit 7 bis 21 Kohlenstoffatomen,
Aralkyloxycarbonylrestes mit 8 bis 21 Kohlenstoffatomen ist und

$R_3$ einer des Restes, wie sie für $R_2$ angegeben sind, Wasserstoff, ein Rest der Formel

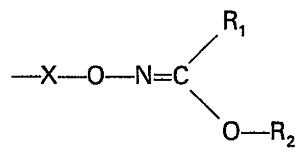

oder ein Rest $YSO_2$ ist, wobei

X ein substituierter oder unsubstituierter Rest in Form eines
Alkylenrestes mit 1 bis 12 Kohlenstoffatomen,
Alkenylenrestes mit 2 bis 12 Kohlenstoffatomen,
Cycloalkylenrestes mit 6 bis 12 Kohlenstoffatomen oder
Phenylenrestes ist und

Y ein substituierter oder unsubstituierter Rest in Form eines
Alkylrestes mit 1 bis 20 Kohlenstoffatomen,
Cycloalkylrestes mit 6 bis 20 Kohlenstoffatomen,
Phenylrestes mit 6 bis 20 Kohlenstoffatomen ist.

2. Verfahren nach Anspruch 1, dadurch gekennzeichnet, daß als Initiator eine Verbindung der Formel (I) verwendet wird, in der

$R_1$ die angegebene Bedeutung hat und

$R_2$ ein substituierter oder unsubstituierter Rest in Form eines
Alkylrestes mit 1 bis 20 Kohlenstoffatomen,
Alkenylrestes mit 2 bis 20 Kohlenstoffatomen,
Cyclohexylrestes mit 6 bis 20 Kohlenstoffatomen oder
Aralkylrestes mit 7 bis 20 Kohlenstoffatomen ist, und

$R_3$ Wasserstoff ist.

3. Verfahren nach Anspruch 1, dadurch gekennzeichnet, daß als Initiator eine Verbindung der Formel (I) verwendet wird, in der

$R_1$ die angegebene Bedeutung hat und

$R_2$ ein substituierter oder unsubstituierter Rest in Form eines
Alkylrestes mit 1 bis 20 Kohlenstoffatomen,
Cyclohexylrestes mit 6 bis 20 Kohlenstoffatomen oder
Aralkylrestes mit 7 bis 20 Kohlenstoffatomen ist, und

$R_3$ einer der Reste ist, wie sie für $R_2$ angegeben sind.

4. Verfahren nach Anspruch 1, dadurch gekennzeichnet, daß als Initiator eine Verbindung der Formel (I) verwendet wird, in der

$R_1$ die angegebene Bedeutung hat und

$R_2$ ein substituierter oder unsubstituierter Phenylcarbonylrest mit 7 bis 21 Kohlenstoffatomen ist, und

$R_3$ einer der Reste ist, wie sie für $R_2$ angegeben sind.

5. Verfahren nach Anspruch 1, dadurch gekennzeichnet, daß als Initiator eine Verbindung der Formel (I) verwendet wird, in der

$R_1$ die angegebene Bedeutung hat und

$R_2$ ein substituierter oder unsubstituierter Rest in Form eines
Alkylrestes mit 1 bis 20 Kohlenstoffatomen,
Alkenylrestes mit 2 bis 20 Kohlenstoffatomen,
Cyclohexylrestes mit 6 bis 20 Kohlenstoffatomen,
Phenylrestes mit 6 bis 20 Kohlenstoffatomen oder
Aralkylrestes mit 7 bis 20 Kohlenstoffatomen ist, und

$R_3$ ein substituierter oder unsubstituierter Rest in Form eines
Alkoxycarbonylrestes mit 2 bis 21 Kohlenstoffatomen,

Alkenyloxycarbonylrestes mit 3 bis 21 Kohlenstoffatomen,
Cyclohexyloxycarbonylrestes mit 7 bis 21 Kohlenstoffatomen,
Phenyloxycarbonylrestes mit 7 bis 21 Kohlenstoffatomen, oder
Aralkyloxycarbonylrestes mit 8 bis 21 Kohlenstoffatomen ist.

6. Verfahren nach Anspruch 1, dadurch gekennzeichnet, daß als Initiator eine Verbindung der Formel (I) verwendet wird, in der
$R_1$ die angegebene Bedeutung hat und einer der Reste
$R_2$ und $R_3$ ein substituierter oder unsubstituierter Rest in Form eines
Alkylrestes mit 1 bis 20 Kohlenstoffatomen,
Alkenylrestes mit 2 bis 20 Kohlenstoffatomen,
Cyclohexylrestes mit 6 bis 20 Kohlenstoffatomen,
Phenylrestes mit 6 bis 20 Kohlenstoffatomen, oder
Aralkylrestes mit 7 bis 20 Kohlenstoffatomen ist, und
der andere Rest ein substituierter oder unsubstituierter Rest in Forme eines
Alkylcarbonylrestes mit 2 bis 21 Kohlenstoffatomen,
Alkenylcarbonylrestes mit 3 bis 21 Kohlenstoffatomen,
Cyclohexylcarbonylrestes mit 7 bis 21 Kohlenstoffatomen,
Phenylcarbonylrestes mit 7 bis 21 Kohlenstoffatomen, oder
Aralkylcarbonylrestes mit 8 bis 21 Kohlenstoffatomen ist.

7. Verfahren nach Anspruch 6, dadurch gekennzeichnet, daß als Initiator eine Verbindung der Formel (I) verwendet wird, in der
$R_1$ ein Alkylrest mit 2 bis 20 Kohlenstoffatomen ist,
$R_2$ ein Alkylrest mit 1 bis 5 Kohlenstoffatomen ist, und
$R_3$ ein substituierter oder unsubstituierter Phenylcarbonylrest mit 7 bis 21 Kohlenstoffatomen ist.

8. Verfahren nach Anspruch 1, dadurch gekennzeichnet, daß als Initiator Äthyl-O-benzoyl- dodecanhydroximat verwendet wird.

9. Verfahren nach einem der vorstehenden Ansprüche, dadurch gekennzeichnet, daß eine Verbindung der Formel (I) bei der Mischpolymerisation von ungesättigten Polyesterharzen verwendet wird.

10. Verfahren nach einem der Ansprüche 1 bis 8, dadurch gekennzeichnet, daß eine Verbindung der Formel (I) bei der Vernetzung von Polymeren verwendet wird.

11. Verfahren nach Anspruch 10, dadurch gekennzeichnet, daß eine Verbindung der Formel (I) bei der Vernetzung von (Misch)-polymeren von Äthylen verwendet wird.

12. Verfahren nach einem der Ansprüche 1 bis 8, dadurch gekennzeichnet, daß eine Verbindung der Formel (I) beim Abbau von Polymeren verwendet wird.

13. Verfahren nach Anspruch 12, dadurch gekennzeichnet, daß eine Verbindung der Formel (I) beim Abbau von Polypropylen verwendet wird.

14. Geformte Teile, vollständig oder im wesentlichen aus (Misch)-polymeren bestehend, die nach dem Verfahren nach den Ansprüchen 9, 10, 11, 12 oder 13 erhalten worden sind.